# EUROPEAN PATENT APPLICATION

(11) **EP 4 534 341 A1**
(43) Date of publication of application: **09.04.2025**
(21) Application number: 23814683.1
(22) Date of filing: 06.03.2023
(51) Int. Cl.: B60L 58/18

(54) **BATTERY CIRCUIT AND VEHICLE**

(30) Priority: 31.05.2022 CN 202210614138
(71) Applicant: BYD Company Limited, Shenzhen, Guangdong 518118 (CN)
(72) Inventor: DENG, Linwang, Shenzhen, Guangdong 518118 (CN); FENG, Tianyu, Shenzhen, Guangdong 518118 (CN); XIONG, Shi, Shenzhen, Guangdong 518118 (CN)
(74) Representative: Gunzelmann, Rainer
(86) International application number: PCT/CN2023/079718
(87) International publication number: WO 2023/231484

(57) **Abstract**

A battery circuit (100), comprising a power supply end (101), a first battery pack (102), a second battery pack (103), a voltage transformation unit (104), a first switch (105), a second switch (106), a grounding end (107), and a control unit (108). A positive electrode of a first battery pack (102) is connected to a power supply end (101), and a negative electrode of the first battery pack (102) is connected to a positive electrode of a second battery pack (103); a negative electrode of the second battery pack (103) is connected to the grounding end (107); a first end of a first switch (105) is connected to the power supply end (101), a second end of the first switch (105) is connected to a first end of a second switch (106), and a control end of the first switch (105) is connected to a first output end of a control unit (108); a second end of the second switch (106) is connected to the grounding end (107), and a control end of the second switch (106) is connected to a second output end of the control unit (108); the voltage transformation unit (104) is connected between the negative electrode of the first battery pack (102) and the second end of the first switch (105) and is used for controlling closing or disconnection of the first switch (105) and the second switch (106) according to output power and a power threshold of the battery circuit. Also disclosed is a vehicle comprising the battery circuit.

## Description

### CROSS-REFERENCE TO RELATED APPLICATIONS

The present disclosure claims priority to Chinese Patent Application No. 202210614138.5, filed on May 31, 2022 and entitled "BATTERY CIRCUIT AND VEHICLE". The entire content of the above-referenced application is incorporated herein by reference.

### FIELD

The present disclosure relates to the technical field of vehicles, and more specifically, to a battery circuit and a vehicle.

### BACKGROUND

In the related art, a dual battery pack including a power-type battery pack and an energy-type battery pack is provided.

An output power is an important parameter of a battery. How to control discharging of the dual battery pack including the power-type battery pack and the energy-type battery pack according to an output power of a battery becomes a technical problem urgently to be resolved.

### SUMMARY

The present disclosure is intended to provide a new technical solution for a battery circuit.

According to a first aspect of the present disclosure, a battery circuit is provided, which includes a power supply terminal, a first battery pack, a second battery pack of a different type from the first battery pack, a voltage transformation unit, a first switch, a second switch, a grounding terminal, and a control unit.

A positive electrode of the first battery pack is connected with the power supply terminal. A negative electrode of the first battery pack is connected with a positive electrode of the second battery pack.

A negative electrode of the second battery pack is connected with the grounding terminal.

A first terminal of the first switch is connected with the power supply terminal. A second terminal of the first switch is connected with a first terminal of the second switch. A control terminal of the first switch is connected with a first output terminal of the control unit.

A second terminal of the second switch is connected with the grounding terminal. A control terminal of the second switch is connected with a second output terminal of the control unit.

A voltage transformation unit is connected between the negative electrode of the first battery pack and the second terminal of the first switch.

The control unit is configured to control the first switch and the second switch to be closed or opened according to an output power of the battery circuit and a power threshold of the battery circuit.

According to an embodiment of the present disclosure, the control unit is configured to:
control the first switch and the second switch to be closed or opened according to a preset control rule when the output power is less than the power threshold; and
control both the first switch and the second switch to be opened when the output power is greater than or equal to the power threshold.

According to an embodiment of the present disclosure, a deviation between a ratio of a capacity of the first battery pack to a capacity of the second battery pack and a ratio of a maximum discharge rate of the second battery pack to a maximum discharge rate of the first battery pack is less than a preset range.

According to an embodiment of the present disclosure, the ratio of the capacity of the first battery pack to the capacity of the second battery pack is the same as the ratio of the maximum discharge rate of the second battery pack to the maximum discharge rate of the first battery pack.

According to an embodiment of the present disclosure, the first battery pack is a power-type battery pack; and the second battery pack is an energy-type battery pack; or
the first battery pack is an energy-type battery pack; and the second battery pack is a power-type battery pack.

According to an embodiment of the present disclosure, the control unit includes a subtracter, a control subunit, a pulse-width modulation (PWM) signal generation subunit, and an inverter.

A first input terminal of the subtracter is configured to receive a current value of the first battery pack. A second input terminal of the subtracter is configured to receive a reference current value. An output terminal of the subtracter is connected with an input terminal of the control subunit.

A first output terminal of the control subunit is connected with an input terminal of the PWM signal generation subunit.

A first output terminal of the PWM signal generation subunit is connected with the control terminal of the first switch. A second output terminal of the PWM signal generation subunit is connected with an input terminal of the inverter.

An output terminal of the inverter is connected with the control terminal of the second switch.

According to an embodiment of the present disclosure, the first battery pack is a power-type battery pack, and the second battery pack is an energy-type battery pack. The battery circuit further includes a filtering unit.

A first terminal of the filtering unit is connected with the positive electrode of the first battery pack. A second terminal of the filtering unit is connected with the power supply terminal. A third terminal of the filtering unit is connected with the negative electrode of the first battery pack.

According to an embodiment of the present disclosure, the filtering unit includes a first inductor and a first capacitor.

A first terminal of the first inductor is connected with the positive electrode of the first battery pack. A second terminal of the first inductor is connected with the power supply terminal.

A first terminal of the first capacitor is connected with the first terminal of the first inductor. A second terminal of the first capacitor is connected with the negative electrode of the first battery pack.

According to an embodiment of the present disclosure, the battery circuit further includes a first freewheeling unit and a second freewheeling unit.

An input terminal of the first freewheeling unit is connected with the second terminal of the first switch. An output terminal of the first freewheeling unit is connected with the first terminal of the first switch.

An input terminal of the second freewheeling unit is connected with the second terminal of the second switch. An output terminal of the second freewheeling unit is connected with the first terminal of the second switch.

According to an embodiment of the present disclosure, the first freewheeling unit is a first diode, and the second freewheeling unit is a second diode.

An anode of the first diode is connected with the second terminal of the first switch. A cathode of the first diode is connected with the first terminal of the first switch.

An anode of the second diode is connected with the second terminal of the second switch. A cathode of the second diode is connected with the first terminal of the second switch.

According to an embodiment of the present disclosure, the battery circuit further includes a voltage stabilization unit.

The voltage stabilization unit is connected between the power supply terminal and the grounding terminal.

According to an embodiment of the present disclosure, the voltage stabilization unit is a second capacitor.

According to an embodiment of the present disclosure, the voltage transformation unit is a second inductor.

According to a second aspect of the present disclosure, a vehicle is provided. The vehicle includes the battery circuit in any implementation of the foregoing first aspect.

According to the battery circuit in an embodiment of the present disclosure, discharging of a dual battery pack including a power-type battery pack and an energy-type battery pack may be controlled according to an output power of a battery.

Other features and advantages of the present disclosure will become clear from the following detailed description of exemplary embodiments of the present disclosure provided with reference to drawings.

### BRIEF DESCRIPTION OF THE DRAWINGS

Drawings that are incorporated into and constitute a part of the specification illustrate embodiments of the present disclosure, and are used to explain the principle of the present disclosure together with the description thereof.
FIG. 1 is a schematic structural diagram I of a battery circuit according to an embodiment of the present disclosure;
FIG. 2 is a schematic structural diagram of a control unit according to an embodiment of the present disclosure;
FIG. 3 is a schematic structural diagram II of the battery circuit according to an embodiment of the present disclosure; and
FIG. 4 is a schematic structural diagram III of the battery circuit according to an embodiment of the present disclosure.

In the drawings:
100-Battery circuit; 101-Power supply terminal; 102-First battery pack; 103-Second battery pack;
104-Voltage transformation unit; 1041-Second inductor; 105-First switch; 106-Second switch;
107-Grounding terminal; 108-Control unit; 1081-Subtracter; 1082-Control subunit;
1083-Pulse-width modulation (PWM) signal generation subunit; 1084-Inverter; 1085-Switch opening signal generation subunit;
109-Filtering unit; 1091-First inductor; 1092-First capacitor;
110-First freewheeling unit; 1101-First diode; 111-Second freewheeling unit;
1111-Second diode; 112-Voltage stabilization unit; 1121-Second capacitor.

### DETAILED DESCRIPTION

Various exemplary embodiments of the present disclosure are described in detail with reference to drawings. It should be noted that, unless otherwise specified, relative arrangement, numerical expressions, and numerical values of components and steps described in the embodiments do not limit the scope of the present disclosure.

The following descriptions of at least one exemplary embodiment are merely illustrative, and in no way constitute any limitation on the present disclosure and the application or use thereof.

Technologies, methods, and devices known to a person of ordinary skill in the related art may not be discussed in detail, but where appropriate, the techniques, the methods, and the devices should be considered as a part of the specification.

In examples shown and discussed herein, any specific value should be construed as merely exemplary and not as a limitation. Therefore, other examples of the exemplary embodiments may have different values.

It should be noted that, similar reference numerals and letters represent similar items in the following drawings. Therefore, once an item is defined in a drawing, the item does not need to be further discussed in subsequent drawings.

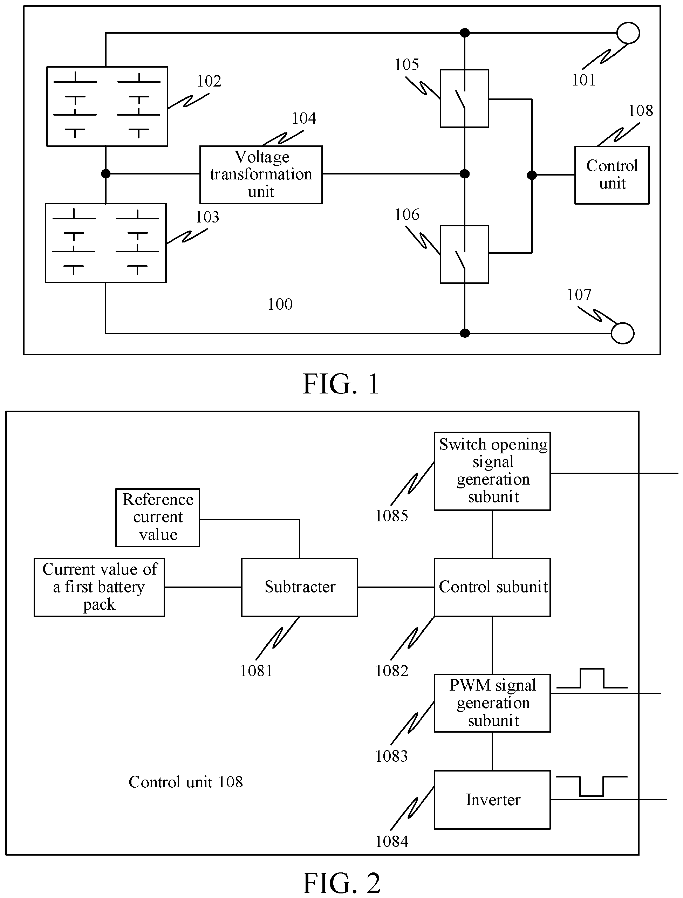

An embodiment of the present disclosure provides a battery circuit 100. As shown in FIG. 1, the battery circuit 100 includes a power supply terminal 101, a first battery pack 102, a second battery pack 103 of a different type from the first battery pack 102, a voltage transformation unit 104, a first switch 105, a second switch 106, a grounding terminal 107, and a control unit 108.

A positive electrode of the first battery pack 102 is connected with the power supply terminal 101. A negative electrode of the first battery pack 102 is connected with a positive electrode of the second battery pack 103.

A negative electrode of the second battery pack 103 is connected with the grounding terminal 107.

A first terminal of the first switch 105 is connected with the power supply terminal 101. A second terminal of the first switch 105 is connected with a first terminal of the second switch 106. A control terminal of the first switch 105 is connected with a first output terminal of the control unit 108.

A second terminal of the second switch 106 is connected with the grounding terminal 107. A control terminal of the second switch 106 is connected with a second output terminal of the control unit 108.

The voltage transformation unit 104 is connected between the negative electrode of the first battery pack 102 and the second terminal of the first switch 105.

The control unit 108 is configured to control the first switch 105 and the second switch 106 to be closed or opened according to an output power of the battery circuit and a power threshold of the battery circuit.

In this embodiment of the present disclosure, the battery circuit is provided, which includes the power supply terminal, the first battery pack, the second battery pack of a different type from the first battery pack, the voltage transformation unit, the first switch, the second switch, the grounding terminal, and the control unit. The positive electrode of the first battery pack is connected with the power supply terminal. The negative electrode of the first battery pack is connected with the positive electrode of the second battery pack. The negative electrode of the second battery pack is connected with the grounding terminal. The first terminal of the first switch is connected with the power supply terminal. The second terminal of the first switch is connected with the first terminal of the second switch. The control terminal of the first switch is connected with the first output terminal of the control unit. The second terminal of the second switch is connected with the grounding terminal. The control terminal of the second switch is connected with the second output terminal of the control unit. The voltage transformation unit is connected between the negative electrode of the first battery pack and the second terminal of the first switch. The control unit is configured to control the first switch and the second switch to be closed or opened according to the output power of the battery circuit and the power threshold of the battery circuit. According to the battery circuit provided in this embodiment of the present disclosure, discharging of a dual battery pack including a power-type battery pack and an energy-type battery pack may be controlled according to an output power of a battery.

It should be noted that, the battery circuit provided in the embodiments of the present disclosure is configured to achieve the control of the dual battery pack including the power-type battery pack and the energy-type battery pack in a discharging state.

In this embodiment of the present disclosure, when the battery circuit 100 is in a discharging state, the power supply terminal 101 in the battery circuit 100 is configured to connect to a power input terminal of a load, and the grounding terminal 107 in the battery circuit 100 is configured to connect to a grounding terminal of the load. Exemplarily, the load may be a motor of an electric vehicle or a hybrid vehicle.

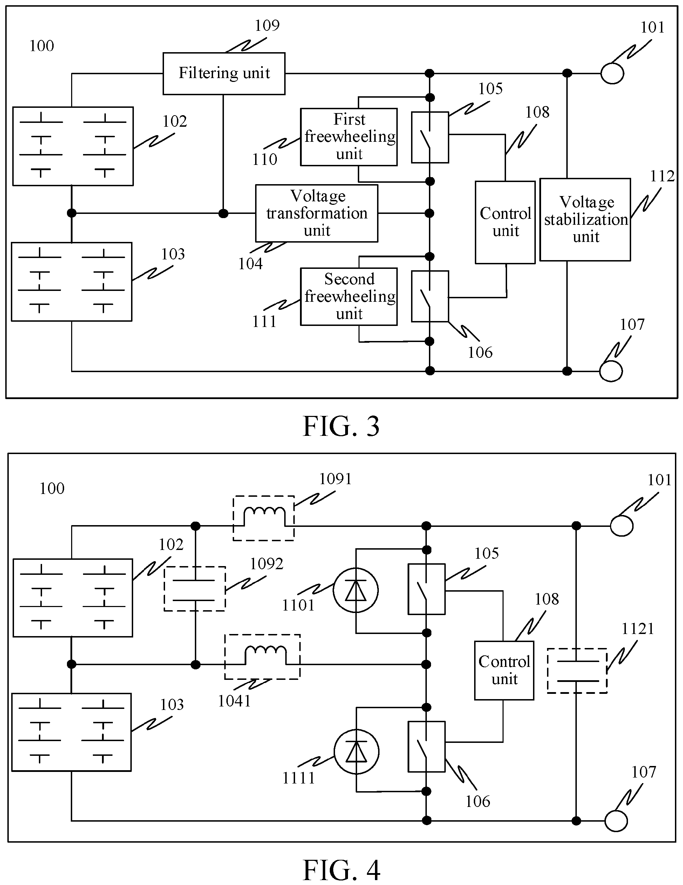

In an embodiment of the present disclosure, as shown in FIG. 4, the voltage transformation unit 104 may be a second inductor 1041. Certainly, the voltage transformation unit 104 may be implemented in another manner.

In an embodiment of the present disclosure, an inductance value of the second inductor 1041 may be set to a range of 2 µH to 1500 µH.

In this embodiment of the present disclosure, the voltage transformation unit 104 has a low cost and a simple structure when the voltage transformation unit 104 is the second inductor 1041.

In an embodiment of the present disclosure, the first switch 105 and the second switch 106 may be switch devices such as a switch IC, a metal oxide semiconductor field effect transistor (MOSFET), an insulated gate bipolar transistor (IGBT), or a silicon carbide (SiC) switch.

It should be noted that, in this embodiment of the present disclosure, the first switch 105 and the second switch 106 are switches of a same type. To be specific, when the control terminals of the first switch and the second switch receive a high level, the first switch 105 and the second switch 106 are both closed or opened. When the control terminals of the first switch and the second switch receive a low level, the first switch 105 and the second switch 106 are both opened or closed.

In this embodiment of the present disclosure, the first battery pack 102 and the second battery pack 103 are of different types. Specifically, the first battery pack 102 is a power-type battery pack, and the second battery pack 103 is an energy-type battery pack. Alternatively, the first battery pack 102 is an energy-type battery pack, and the second battery pack 103 is a power-type battery pack.

In this embodiment of the present disclosure, the power-type battery pack is a battery pack with a high power density. The power density is a maximum energy transfer power during charging/discharging of a battery with a unit weight or volume. In addition, in this embodiment of the present disclosure, a voltage value of the power-type battery pack may be set to a range of 100 V to 1000 V.

The energy-type battery pack is a battery pack with a high energy density. The energy density is energy stored in a battery with a unit weight or volume. In addition, in this embodiment of the present disclosure, a voltage value of the energy-type battery pack may be set to a range of 100 V to 1000 V.

In this embodiment of the present disclosure, specific types of the first battery pack 102 and the second battery pack 103 are not limited, which can improve compatibility of the battery circuit 100 provided in the embodiments of the present disclosure.

In this embodiment of the present disclosure, the output power of the battery circuit 100 is a product of a voltage value between the power supply terminal 101 and the grounding terminal 107 of the battery circuit 100 and a current value of the power supply terminal 101 of the battery circuit 100.

In an embodiment of the present disclosure, the current value of the power supply terminal 101 of the battery circuit 100 may be detected through an ammeter. The voltage value between the power supply terminal 101 and the grounding terminal 107 of the battery circuit 100 may be detected through a voltmeter.

In this embodiment of the present disclosure, the power threshold is an allowable maximum operating power for devices such as the first switch 105, the second switch 106, and the voltage transformation unit 104 in the battery circuit 100. In an example, the power threshold is 50 kW.

In an embodiment of the present disclosure, that the control unit 108 is configured to control the first switch 105 and the second switch 106 to be closed or opened according to the output power of the battery circuit 100 and the power threshold of the battery circuit may be specifically implemented as follows:

The first switch 102 and the second switch 103 are controlled to be closed or opened according to a preset control rule when the output power is less than the power threshold.

In this embodiment of the present disclosure, the preset control rule is performing an on/off operation, which includes controlling the first switch 105 to be opened and the second switch 106 to be closed within a first preset time period and controlling the first switch 105 to be closed and the second switch 106 to be opened within a second preset time period. The on/off operation is repeated until the first battery pack 102 is open circuited.

In this embodiment, the second preset time period is a time period adjacent to the first preset time period and after the first preset time period. Durations corresponding to the first preset time period and the second preset time period may be set according to experience or otherwise.

In this embodiment of the present disclosure, when the output power of the battery circuit 100 is less than the power threshold, the first switch 105 is controlled to be opened and the second switch 106 is controlled to be closed within the first preset time period. In this case, the second battery pack 103 charges the voltage transformation unit 104. The first switch 105 is controlled to be closed and the second switch 106 is controlled to be opened within the second preset time period. In this case, the voltage transformation unit 104 releases the stored power. In other words, the voltage transformation unit 104 implements a boosting function. The process is repeated. When a voltage at an output terminal of the voltage transformation unit 104 (a terminal connected to the first switch 105) rises to a same voltage as a bus, the first battery pack 102 is open circuited. Based on the above, only the second battery pack 103 is discharged, and an output power during the discharging of the second battery pack 103 is greater than a power that can be outputted by the second battery pack 103.

In this embodiment of the present disclosure, a specific implementation in which the control unit 108 controls the first switch 105 and the second switch 106 to be closed or opened according to the output power of the battery circuit 100 and the power threshold of the battery circuit is provided.

In an embodiment of the present disclosure, that the control unit 108 is configured to control the first switch 105 and the second switch 106 to be closed or opened according to the output power of the battery circuit 100 and the power threshold of the battery circuit may alternatively be specifically implemented as follows:

Both the first switch 105 and the second switch 106 are controlled to be opened when the output power of the battery circuit 100 is greater than or equal to the power threshold.

In this embodiment of the present disclosure, when the output power of the battery circuit 100 is greater than or equal to the power threshold, the first switch 105, the second switch 106, and the voltage transformation unit 104 of the battery circuit 100 are damaged, causing a problem that the battery circuit 100 cannot normally operate. In this case, both the first switch 105 and the second switch 106 are controlled to be opened, so that the first switch 105, the second switch 106, and the voltage transformation unit 104 do not operate. In this way, the problem that the battery circuit 100 cannot normally operate as a result of the first switch 105, the second switch 106, and the voltage transformation unit 104 of the battery circuit 100 being damaged can be avoided. In addition, when both the first switch 105 and the second switch 106 are opened, the first battery pack 102 and the second battery pack 103 are connected in series for discharging.

In this embodiment of the present disclosure, the battery circuit is provided, which includes the power supply terminal, the first battery pack, the second battery pack of a different type from the first battery pack, the voltage transformation unit, the first switch, the second switch, the grounding terminal, and the control unit. The positive electrode of the first battery pack is connected with the power supply terminal. The negative electrode of the first battery pack is connected with the positive electrode of the second battery pack. The negative electrode of the second battery pack is connected with the grounding terminal. The first terminal of the first switch is connected with the power supply terminal. The second terminal of the first switch is connected with the first terminal of the second switch. The control terminal of the first switch is connected with the first output terminal of the control unit. The second terminal of the second switch is connected with the grounding terminal. The control terminal of the second switch is connected with the second output terminal of the control unit. The voltage transformation unit is connected between the negative electrode of the first battery pack and the second terminal of the first switch. The control unit is configured to control the first switch and the second switch to be closed or opened according to the output power of the battery circuit and the power threshold of the battery circuit. According to the battery circuit provided in this embodiment of the present disclosure, discharging of a dual battery pack including a power-type battery pack and an energy-type battery pack may be controlled according to an output power of a battery.

In this embodiment of the present disclosure, a deviation between a ratio of a capacity Q1 of the first battery pack 102 to a capacity Q2 of the second battery pack 103 and a ratio of a maximum discharge rate X2 of the second battery pack 103 to a maximum discharge rate X1 of the first battery pack 102 is less than a preset range.

The maximum discharge rate represents a ratio of a maximum discharging current of the battery pack to a battery capacity. For example, if a maximum discharging current of a battery pack with a battery capacity of 10 Ah is 50 A, a maximum discharge rate thereof is 50 A/10 Ah=5 C.

In this embodiment of the present disclosure, the preset range is an allowable range of the deviation between the ratio of the capacity Q1 of the first battery pack 102 to the capacity Q2 of the second battery pack 103 and the ratio of the maximum discharge rate X2 of the second battery pack 103 to the maximum discharge rate X1 of the first battery pack 102. When the deviation between the ratio of the capacity Q1 of the first battery pack 102 to the capacity Q2 of the second battery pack 103 and the ratio of the maximum discharge rate X2 of the second battery pack 103 to the maximum discharge rate X1 of the first battery pack 102 is less than the preset range, it indicates that the ratio of the capacity Q1 of the first battery pack 102 to the capacity Q2 of the second battery pack 103 is substantially the same as the ratio of the maximum discharge rate X2 of the second battery pack 103 to the maximum discharge rate X1 of the first battery pack 102.

In an embodiment of the present disclosure, the preset range may exemplarily be ±0.5.

It should be noted that, a specific value of the preset range is not limited in this embodiment of the present disclosure.

In this embodiment of the present disclosure, when the deviation between the ratio of the capacity of the first battery pack 102 to the capacity of the second battery pack 103 and the ratio of the maximum discharge rate of the second battery pack 103 to the maximum discharge rate of the first battery pack 101 is less than the second preset range, maximum discharging currents of the two battery packs can be substantially the same. Based on the above, for example, the two battery packs can be connected in series for stable discharging.

It should be noted that, generally, a sum of the capacity Q1 of the first battery pack 102 and the capacity Q2 of the second battery pack 103 is equal to a total capacity Qnom required for the load, that is, Q1+Q2=Qnom.

In an embodiment of the present disclosure, the ratio of the capacity Q1 of the first battery pack 102 to the capacity Q2 of the second battery pack 103 is the same as the ratio of the maximum discharge rate X2 of the second battery pack 103 to the maximum discharge rate X1 of the first battery pack 102. In this way, the maximum discharging currents of the two battery packs can be exactly the same.

Based on the above, in an example, Qnom=120 Ah. In this case, Q1=100 Ah, Q2=20 Ah, X1=1 C, and X2=5 C may be set.

In an embodiment of the present disclosure, the control unit 108 may control the first switch 105 and the second switch 106 to be closed or opened according to the preset control rule through a pulse-width modulation (PWM) signal. The first switch 105 and the second switch 106 are controlled to be opened and closed according to the PWM signal. Opening durations and closing durations of the first switch and the second switch 106 are controlled according to a duty cycle of the PWM signal.

Based on the above, as shown in FIG. 2, the control unit 108 includes a subtracter 1081, a control subunit 1082, a PWM signal generation subunit 1083, and an inverter 1084.

A first input terminal of the subtracter 1081 is configured to receive a current value of the first battery pack 102. A second input terminal of the subtracter 1081 is configured to receive a reference current value. An output terminal of the subtracter 1081 is connected with an input terminal of the control subunit 1082.

A first output terminal of the control subunit 1082 is connected with an input terminal of the PWM signal generation subunit 1083.

A first output terminal of the PWM signal generation subunit 1083 is connected with the control terminal of the first switch 105. A second output terminal of the PWM signal generation subunit 1083 is connected with an input terminal of the inverter 1084.

An output terminal of the inverter 1084 is connected with the control terminal of the second switch 106.

In this embodiment of the present disclosure, a current value of an output current of the first battery pack 102 may be detected through a current value detection unit. The current value detection unit transmits the current value of the output current of the first battery pack 102 to the first input terminal of the subtracter 1081 after detecting the current value.

In this embodiment of the present disclosure, a manner in which the subtracter 1081 receives the current value of the first battery pack 102 and the reference current value is not limited.

In this embodiment of the present disclosure, the control subunit 1082 stores the power threshold, and the control subunit 108 is configured to obtain the output power of the battery circuit 100. In this embodiment of the present disclosure, a manner in which the control subunit 108 obtains the output power of the battery circuit 100 is not limited.

In an embodiment of the present disclosure, the control subunit 1082 may exemplarily be a microcontroller unit (MCU), a central processing unit (CPU), or the like.

In this embodiment of the present disclosure, the subtracter 1081 is configured to calculate a difference between the current value of the first battery pack 102 and the reference current value. The reference current value is usually set to 0, because the first battery pack 102 needs to be open circuited.

The control subunit 1082 is further configured to generate a PWM signal generation instruction according to a calculation result of the subtracter 1081 when the output power of the battery circuit 100 is less than the power threshold, and outputs the PWM signal generation instruction to the PWM signal generation subunit 1083.

The PWM signal generation subunit 1083 is configured to output a PWM signal with an adjustable duty cycle under control of the control subunit 1082.

The inverter 1084 is configured to invert a level outputted by the PWM signal generation subunit 1083.

It should be noted that, in this embodiment of the present disclosure, the subtracter 1081 may periodically receive the current value of the output current of the first battery pack 105. In this way, closed-loop negative feedback regulation can be achieved, so that the duty cycle of the PWM signal generated by the PWM signal generation subunit 1083 may be changed, thereby achieving an open circuit of the first battery pack 102 more quickly and accurately.

In this embodiment of the present disclosure, the control unit 108 with a simple structure is provided. In this way, design difficulty of the battery circuit provided in the embodiments of the present disclosure can be reduced.

In an embodiment of the present disclosure, as shown in FIG. 2, to control both the first switch 105 and the second switch 106 to be opened, the control unit 108 further includes a switch opening signal generation subunit 1085.

A second output terminal of the control subunit 1082 is connected with an input terminal of the switch opening signal generation subunit 1085.

A first output terminal of the switch opening signal generation subunit 1085 is respectively connected with the control terminal of the first switch 105 and the control terminal of the second switch 106.

In this embodiment of the present disclosure, the switch opening signal generation subunit 1085 is configured to output a signal for controlling the first switch 105 and the second switch 106 to be opened under control of the control subunit 1082.

In an embodiment of the present disclosure, when the first battery pack 102 is a power-type battery pack and the second battery pack 103 is an energy-type battery pack, as shown in FIG. 3, the battery circuit 100 provided in this embodiment of the present disclosure further includes a filtering unit 109.

A first terminal of the filtering unit 109 is connected with the positive electrode of the first battery pack 102. A second terminal of the filtering unit 109 is connected with the power supply terminal 101. A third terminal of the filtering unit 109 is connected with the negative electrode of the first battery pack 102.

In this embodiment of the present disclosure, since the power-type battery pack is usually used only when a peak power is generated during the traveling of the electric vehicle or the hybrid vehicle (such as the peak discharging power generated during traction and the peak charging power generated during the braking), in other cases, an output current of the power-type battery pack is expected to be 0. In these cases, arranging the filtering unit 109 can suppress a current ripple of the first battery pack 102, to prevent the output current of the power-type battery pack (the first battery pack 102) from fluctuating around 0. In this way, high-frequency rapid charging/discharging of the first battery pack 102 can be avoided, thereby reducing a life decrease of the first battery pack 102.

In an embodiment of the present disclosure, as shown in FIG. 4, the filtering unit 109 includes a first inductor 1091 and a first capacitor 1092.

A first terminal of the first inductor 1091 is connected with the positive electrode of the first battery pack 102. A second terminal of the first inductor 1091 is connected with the power supply terminal.

A first terminal of the first capacitor 1092 is connected with the first terminal of the first inductor 1091. A second terminal of the first capacitor 1092 is connected with the negative electrode of the first battery pack 102.

Certainly, a filtering unit 109 of another structure may also be used, which is not described in detail in this embodiment of the present disclosure.

In this embodiment of the present disclosure, the first inductor 1091 is a filter inductor, and the first inductor 1091 may be configured with a value in a range of 2 µH to 1500 µH. The first capacitor 1092 is a filter capacitor, the first capacitor 1092 may be configured with a value a range of 2 µF to 1500 µF.

It should be noted that, when the first battery pack 102 has a filtering function, the first inductor 1091 and the first capacitor 1092 may be configured with relatively small values. For example, the first inductor 1091 may be configured with a value of 2 µH, and the first capacitor 1092 may be configured with a value of 2 µF.

Correspondingly, when the first battery pack 102 does not have the filtering function, the first inductor 1091 and the first capacitor 1092 may be configured with relatively large values. For example, the first inductor 1091 may be configured with a value of 1500 µH, and the first capacitor 1092 may be configured with a value of 1500 µF.

In this embodiment of the present disclosure, the filtering unit 109 with a simple structure is provided, which can reduce hardware costs, design difficulty, and a footprint of the battery circuit 100.

In an embodiment of the present disclosure, as shown in FIG. 3, the battery circuit 100 provided in this embodiment of the present disclosure further includes a first freewheeling unit 110 and a second freewheeling unit 111.

An input terminal of the first freewheeling unit 110 is connected with the second terminal of the first switch 105. An output terminal of the first freewheeling unit 110 is connected with the first terminal of the first switch 105.

An input terminal of the second freewheeling unit 111 is connected with the second terminal of the second switch 106. An output terminal of the second freewheeling unit 111 is connected with the first terminal of the second switch 106.

In this embodiment of the present disclosure, at an initial moment of closing the second switch 106 and opening the first switch 105, the first switch 105 usually cannot be controlled to be immediately opened as a result of freewheeling time and action time of the first switch 105. As a result, a short circuit quickly occurs between the first switch 105 and the second switch 106, which causes the first battery pack 102 and the second battery pack 103 to be burnt.

In this embodiment of the present disclosure, the second freewheeling unit 111 is connected in parallel with the two terminals of the second switch 106, and the second freewheeling unit 111 performs freewheeling. In this way, closing time of the second switch 106 can be delayed during control of the first switch 105 to be opened, thereby preventing the first battery pack 102 and the second battery pack 103 from being burnt.

Similarly, the first freewheeling unit 110 is connected in parallel with the two terminals of the first switch 105, and the first freewheeling unit 110 performs freewheeling. In this way, closing time of the first switch 105 can be delayed during control of the second switch 106 to be opened, thereby preventing the first battery pack 102 and the second battery pack 103 from being burnt.

In an embodiment of the present disclosure, as shown in FIG. 4, the first freewheeling unit 110 is a first diode 1101, and the second freewheeling unit 111 is a second diode 1111.

An anode of the first diode 1101 is connected with the second terminal of the first switch 105. A cathode of the first diode 1101 is connected with the first terminal of the first switch 105.

An anode of the second diode 1111 is connected with the second terminal of the second switch 106. A cathode of the second diode 1111 is connected with the first terminal of the second switch 106.

In this embodiment of the present disclosure, the first freewheeling unit 110 and the second freewheeling unit 111 with a simple structure are provided, which can reduce hardware costs, design difficulty, and a footprint of the battery circuit 100.

In an embodiment of the present disclosure, as shown in FIG. 3, the battery circuit 100 provided in this embodiment of the present disclosure further includes a voltage stabilization unit 112.

The voltage stabilization unit 1121 is connected between the power supply terminal 101 and the grounding terminal 107.

In this embodiment of the present disclosure, the voltage stabilization unit 112 is configured to filter out a voltage fluctuation on a bus, that is, a line on which the power supply terminal 101 of the battery circuit 100 is located, which can stabilize a voltage supplied to the load, and is further configured to reduce negative impact of a voltage fluctuation jointly generated by the first battery pack 102 and the voltage transformation unit 104 on the second battery pack 103.

In an embodiment of the present disclosure, as shown in FIG. 4, the voltage stabilization unit 112 may exemplarily be a second capacitor 1121. Certainly, the voltage stabilization unit 112 may be implemented in another manner.

In an embodiment of the present disclosure, the second capacitor 1121 is a support capacitor, and the second capacitor 1121 may be configured with a value in a range of 2 µF to 1500 µF.

In this embodiment of the present disclosure, the voltage stabilization unit 112 with a simple structure is provided, which can reduce hardware costs, design difficulty, and a footprint of the battery circuit 100.

An embodiment of the present disclosure further provides a vehicle. The vehicle includes the battery circuit 100 in any of the foregoing embodiments.

In this embodiment of the present disclosure, the vehicle is an electric vehicle or a hybrid vehicle.

The embodiments of the present disclosure have been described above. The above description is exemplary and non-exhaustive, and the present disclosure is not limited to the disclosed embodiments. Many modifications and changes made without departing from the scope and the spirit of the various embodiments are apparent to a person of ordinary skill in the art. The selection of the terms used herein is intended to provide best explanation of the principles, practical applications of the various embodiments, or technical improvements of the technologies in the market, or to enable others of ordinary skill in the art to understand the embodiments disclosed herein. The scope of the present disclosure is defined by the appended claims.

## Claims

1. A battery circuit (100), comprising a power supply terminal (101), a first battery pack (102), a second battery pack (103) of a different type from the first battery pack (102), a voltage transformation unit (104), a first switch (105), a second switch (106), a grounding terminal (107), and a control unit (108), wherein
a positive electrode of the first battery pack (102) is connected with the power supply terminal (101); a negative electrode of the first battery pack (102) is connected with a positive electrode of the second battery pack (103);
a negative electrode of the second battery pack (103) is connected with the grounding terminal (107);
a first terminal of the first switch (105) is connected with the power supply terminal (101); a second terminal of the first switch (105) is connected with a first terminal of the second switch (106); a control terminal of the first switch (105) is connected with a first output terminal of the control unit (108);
a second terminal of the second switch (106) is connected with the grounding terminal (107); a control terminal of the second switch (106) is connected with a second output terminal of the control unit (108); and
the voltage transformation unit is connected between the negative electrode of the first battery pack (102) and the second terminal of the first switch (105),
wherein the control unit (108) is configured to control the first switch (105) and the second switch (106) to be closed or opened according to an output power of the battery circuit and a power threshold of the battery circuit.

2. The battery circuit (100) according to claim 1, wherein the control unit (108) is configured to:
control the first switch (105) and the second switch (106) to be closed or opened according to a preset control rule when the output power is less than the power threshold; and
control both the first switch (105) and the second switch (106) to be opened when the output power is greater than or equal to the power threshold.

3. The battery circuit (100) according to claim 1 or 2, wherein a deviation between a ratio of a capacity of the first battery pack (102) to a capacity of the second battery pack (103) and a ratio of a maximum discharge rate of the second battery pack (103) to a maximum discharge rate of the first battery pack (102) is less than a preset range.

4. The battery circuit (100) according to claim 3, wherein the ratio of the capacity of the first battery pack (102) to the capacity of the second battery pack (103) is the same as the ratio of the maximum discharge rate of the second battery pack (103) to the maximum discharge rate of the first battery pack (102).

5. The battery circuit (100) according to any of claims 1 to 4, wherein the first battery pack (102) is a power-type battery pack; and the second battery pack (103) is an energy-type battery pack; or
the first battery pack (102) is an energy-type battery pack; and the second battery pack (103) is a power-type battery pack.

6. The battery circuit (100) according to any of claims 1 to 5, wherein the control unit (108) comprises a subtracter (1081), a control subunit (1082), a pulse-width modulation (PWM) signal generation subunit (1083), and an inverter (1084), wherein
a first input terminal of the subtracter (1081) is configured to receive a current value of the first battery pack (102); a second input terminal of the subtracter (1081) is configured to receive a reference current value; an output terminal of the subtracter (1081) is connected with an input terminal of the control subunit (1082);
a first output terminal of the control subunit (1082) is connected with an input terminal of the PWM signal generation subunit (1083);
a first output terminal of the PWM signal generation subunit (1083) is connected with the control terminal of the first switch (105); a second output terminal of the PWM signal generation subunit (1083) is connected with an input terminal of the inverter (1084); and
an output terminal of the inverter (1084) is connected with the control terminal of the second switch (106).

7. The battery circuit (100) according to claim 5, wherein the first battery pack (102) is a power-type battery pack; the second battery pack (103) is an energy-type battery pack; and the battery circuit further comprises a filtering unit (109), wherein
a first terminal of the filtering unit (109) is connected with the positive electrode of the first battery pack (102); a second terminal of the filtering unit (109) is connected with the power supply terminal (101); and a third terminal of the filtering unit (109) is connected with the negative electrode of the first battery pack (102).

8. The battery circuit (100) according to claim 7, wherein the filtering unit (109) comprises a first inductor (1091) and a first capacitor (1092), wherein
a first terminal of the first inductor (1091) is connected with the positive electrode of the first battery pack (102); a second terminal of the first inductor (1091) is connected with the power supply terminal (101);
a first terminal of the first capacitor (1092) is connected with the first terminal of the first inductor (1091); and a second terminal of the first capacitor (1092) is connected with the negative electrode of the first battery pack (102).

9. The battery circuit (100) according to any of claims 1 to 8, further comprising a first freewheeling unit (110) and a second freewheeling unit (111), wherein
an input terminal of the first freewheeling unit (110) is connected with the second terminal of the first switch (105); an output terminal of the first freewheeling unit (110) is connected with the first terminal of the first switch (105);
an input terminal of the second freewheeling unit (111) is connected with the second terminal of the second switch (106); and an output terminal of the second freewheeling unit (111) is connected with the first terminal of the second switch (106).

10. The battery circuit (100) according to claim 9, wherein the first freewheeling unit (110) is a first diode (1101); and the second freewheeling unit (111) is a second diode (1111), wherein
an anode of the first diode (1101) is connected with the second terminal of the first switch (105); a cathode of the first diode (1101) is connected with the first terminal of the first switch (105);
an anode of the second diode (1111) is connected with the second terminal of the second switch (106); and a cathode of the second diode (1111) is connected with the first terminal of the second switch (106).

11. The battery circuit (100) according to any of claims 1 to 10, further comprising a voltage stabilization unit (112), wherein
the voltage stabilization unit (112) is connected between the power supply terminal (101) and the grounding terminal (107).

12. The battery circuit (100) according to claim 11, wherein the voltage stabilization unit (112) is a second capacitor (1121).

13. The battery circuit (100) according to any of claims 1 to 12, wherein the voltage transformation unit (104) is a second inductor (1041).

14. A vehicle, comprising the battery circuit (100) according to any of claims 1 to 13.
